# EUROPEAN PATENT APPLICATION

(11) **EP 0 673 709 A1**
(43) Date of publication of application: **27.09.1995**
(21) Application number: 95420074.7
(22) Date of filing: 23.03.1995
(51) Int. Cl.: B23Q 11/00, C10M 171/00

(54) **Machine tool damping apparatus**

(30) Priority: 25.03.1994 JP 56336/94
(71) Applicant: FUJIKURA KASEI CO., LTD., Itabashi-Ku Tokyo-To (JP)
(72) Inventor: Edamura, Kazuya, c/o Fujikura Kasei Co., Ltd., Minato-ku, Tokyo (JP); Aoyama, Tojiro, Tokyo (JP); Otsubo, Yasufumi, Chiba-shi, Chiba-ken (JP)
(74) Representative: Guerre, Dominique

(57) **Abstract**

A first electrode 15 is attached to either a movable table 14 or a movable spindle head, and a second electrode 17 is attached to a table base or a support body. The first electrode 15 has one or more electrode surfaces 15a, 15b, ..., and the second electrode 17 has one or more electrode surfaces 17a, 17b,.... These electrode surfaces are made to oppose each other so as to be separated by small gaps, and these gaps are filled with electrorheological fluid. By applying a direct current electric field between the first electrode 15 and the second electrode 17, the apparent viscosity of the ER fluid between the electrodes increases. Consequently, vibrations such as chatter, caused by processing on the table 14 of which the electrode 15 is an extension, are absorbed.

## Description

### BACKGROUND OF THE INVENTION

### Field of the Invention

The present invention relates to damping apparatus for forcibly damping the vibrations of movable tables and movable spindle heads for machine tools, such as boring machines and radial drilling machines. Specifically, it relates to damping apparatus which utilizes the electrorheological effect (hereinafter abbreviated to the ER effect) of electrorheological fluids (hereinafter referred to as ER fluids).

### Related Art

Examples of the application of ER fluids to absorb vibrations, such as chatter generated on machine tool tables during operations like cutting work, and to enhance the machining acccuracy of such work, are extremely rare. Only the research report of Hashizume et al. (Japan Society of Mechanical Engineers, The 71st JSME Fall Annual Meeting, Volume F, pages 401-403, October 1993) is known.

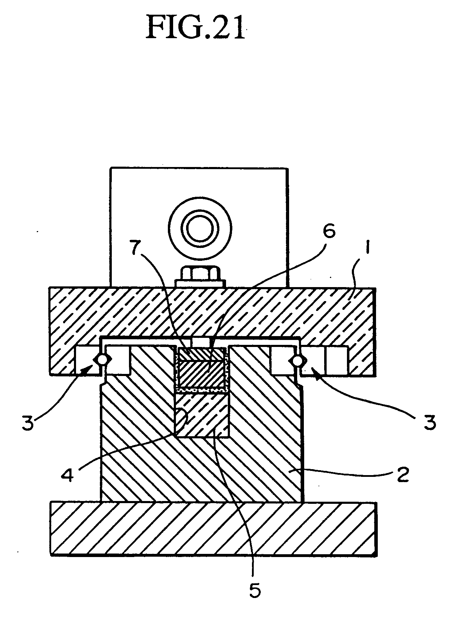

The table damping apparatus disclosed by this prior art, as shown in Figure 21, is primarily composed of a table 1 which is able to move in either direction along one axis (the X-axis). The table 1 is supported in a saddle-fashion by a base 2 which acts as a guide way. The table 1 is able to slide along the base 2 with the ball guides 3, 3 as guiding elements. A channel 4 stretching in the direction of movement of the table 1 is formed in the top central portion of the base 2. In the bottom portion of the channel 4, a lower electrode 5 having a rectangular bar shape is provided along the entire length of the channel 4.

On the underside of the table 1, a bar-shaped upper electrode 6 is attached by way of the insulator board 7 so as to fit into the channel 4 of the above-mentioned base 2. This upper electrode 6 and the lower electrode 5 are separated by a gap of 1 mm or less. This gap is filled with ER fluid.

The ER fluid used in this case is one in which SiO₂ grains having a grain size of 0.65 µm are dispersed in a silicone oil at a concentration of 25 % volume.

It has been confirmed that if the length of the gap between the upper electrode 6 and the lower electrode 5 is made 0.4-0.8 mm and an electric field of 0.5-2 kV/mm is applied therebetween, vibrations occurring in the direction of movement are able to be reduced.

However, the vibration attenuation rate is a mere 15%, and the damping effect is insufficient. Additionally, the effect was obtainable only in the direction of movement of the table 1 (the X direction). Therefore, as a movable table for machine tools, the improvement in the damping effects were not satisfactory.

### Summary of the Invention

The objective of the present invention is to offer a machine tool damping apparatus exhibiting exceptional vibration damping effects in all three axial directions by the use of ER fluids.

The machine tool damping apparatus of the present invention has a first electrode attached to a movable table or a movable spindle head and a second electrode attached to the table's base or to the head's support body. The first electrode has at least one electrode surface, and the second electrode has at least one electrode surface which faces the electrode surface of the first electrode through a minute gap. This gap between the electrode surface of the first electrode and the electrode surface of the second electrode is filled with ER fluid.

Additionally, the electrode surfaces of an electrode may be flat, there may be two or more such flat surfaces, and they may intersect at an angle of 10-170 degrees.

Additionally, one of the electrodes may be in the shape of a flat board, and both its front surface and its back surface may function as electrode surfaces.

Additionally, one of the electrodes may be in the shape of a cylinder, and its circumferential surface may function as an electrode surface.

Furthermore, as an ER fluid, it is preferable to use one in which inorganic/organic composite particles, formed from a core comprising an organic polymeric compound and a shell comprising an inorganic ion exchanger or an inorganic substance displaying ER effects, are dispersed in an electrically insulating medium.

With the machine tool damping apparatus of the present invention. it is possible to effectively control vibrations arising during processing, such as the chatter of machine tool vibration tables or movable spindle heads. Additionally, by choosing the shape of the electrodes, the vibrations are able to be controlled in all three directions simultaneously. Furthermore, its response is rapid, and its vibration damping ability can be easily adjusted with the electric field intensity.

### BRIEF DESCRIPTION OF THE DRAWINGS

Figure 1 is a schematic cross-sectional diagram showing Embodiment 1 of the damping apparatus according to the present invention.

Figure 2 is a plan diagram showing Embodiment 1 of the damping apparatus according to the present invention.

Figure 3 is a graph showing the dynamic characteristics in the X direction for Embodiment 1 of the present invention.

Figure 4 is a graph showing the dynamic characteristics in the Y direction for Embodiment 1 of the present invention.

Figure 5 is a graph showing the dynamic characteristics in the Z direction for Embodiment 1 of the present invention.

Figure 6 is a graph showing the relationship between the damping ratio and the electric field intensity for Embodiment 1 of the present invention.

Figure 7 is a graph showing the influence of the clearance between the electrodes for Embodiment 1 of the present invention.

Figure 8 is a graph showing the chatter damping characteristics for Embodiment 1 of the present invention.

Figure 9 is a graph showing the response for Embodiment 1 of the present invention.

Figure 10 is a graph showing the influence of the viscosity of the dispersion medium for the ER fluid on the dynamic characteristics for Embodiment 1 of the present invention.

Figure 11 is a schematic cross-sectional diagram showing Embodiment 2 of the present invention.

Figure 12 is a schematic cross-sectional diagram showing Embodiment 3 of the present invention.

Figure 13 is a schematic cross-sectional diagram showing Embodiment 4 of the present invention.

Figure 14 is a schematic cross-sectional diagram showing Embodiment 5 of the present invention.

Figure 15 is a schematic cross-sectional diagram showing Embodiment 6 of the present invention.

Figure 16 is a schematic cross-sectional diagram showing Embodiment 7 of the present invention.

Figure 17 is a schematic cross-sectional diagram showing Embodiment 8 of the present invention.

Figure 18 is an explanatory diagram showing the cavity portion of the second electrode of Embodiment 8 of the present invention.

Figure 19 is a schematic partially cross-sectional diagram showing Embodiment 9 of the present invention.

Figure 20 is a cross-sectional diagram cut along the line A-A' in Figure 19.

Figure 21 is a schematic cross-sectional diagram showing an embodiment of a damping apparatus of the prior art.

### DETAILED DESCRIPTION OF THE INVENTION

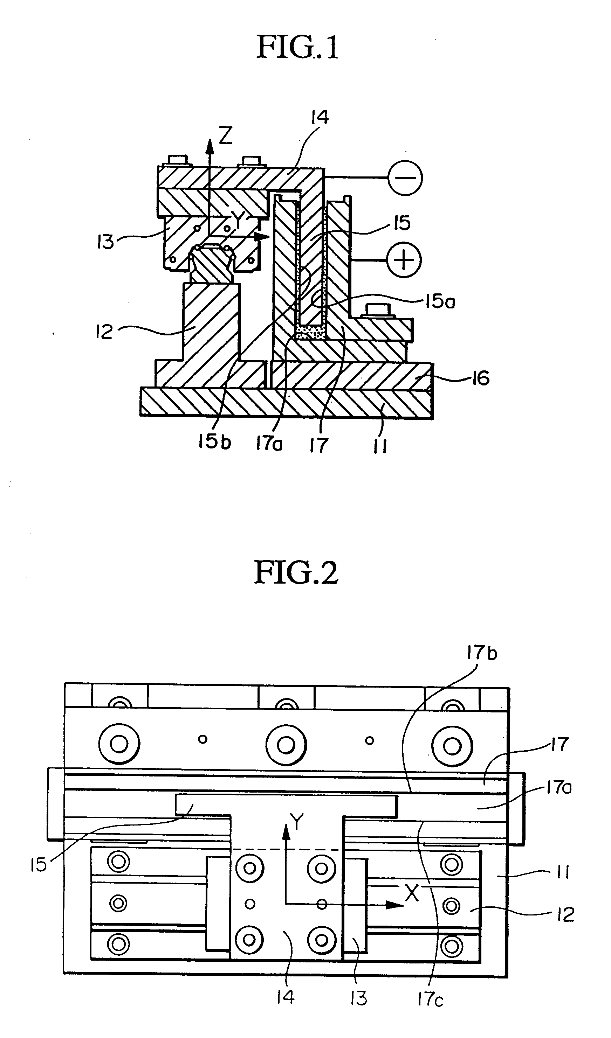

Figures 1 and 2 demonstrate Embodiment 1, which applies the machine tool damping apparatus of the present invention to single-axis movable tables for radial drilling machines and the like.

In the diagram, numeral 11 refers to a base plate, and this base plate 11 is attached to the base of a table which is not shown. A stationary platform 12 acting as a guide way with rolling guides is provided on the base plate 11. On this stationary platform 12 is provided a sliding block 13 having a saddle shape. This sliding block 13 acts as a guide so as to move in the lengthwise direction. A flat board-shaped table 14 is fixed by bolts to the top of this sliding block 13.

From one side of the table 14, a portion thereof extends perpendicularly downwards in the direction of the base plate 11 so as to form a first electrode 15.

The front and back surfaces of this board-shaped first electrode 15 form the flat electrode surfaces 15a and 15b.

On top of the base plate 11, by way of the liner plate 16, a second electrode 17 is fixed. As shown in Figure 1, the cross-sectional shape of the second electrode 17 is that of a deep, approximately U-shaped channel which has both ends closed. This cavity 17a is filled with ER fluid, and the first electrode 15 is inserted in such a way that the first electrode 15 is able to move freely along the direction of movement of the rolling guides.

Therefore, the length of the cavity 17a of the second electrode 17 in the lengthwise direction is approximately equal to the movable distance of the sliding block 13 of the rolling guides. Additionally, the two surfaces opposing each other along the lengthwise direction of the cavity 17a of the second electrode 17 form the electrode surfaces 17b and 17c of the second electrode 17 respectively, and the electrode surfaces 15a and 15b of the first electrode inserted into the cavity 17a face the electrode surfaces 17b and 17c respectively. These electrode surfaces are separated by minute gaps.

The cavity 17a is filled with ER fluid so as to fill these gaps. Furthermore, the first electrode 15 and the second electrode 17 are both connected to a DC electric power source so that the first electrode 15 is negative and the second electrode 17 is positive. Of course, both the first electrode 15 and the second electrode 17 are electrically insulated by ceramic plates or the like.

Here, the coordinate system used for this apparatus is set so that, as seen in Figures 1 and 2, the direction of movement of the table 14 is along the X axis, the Y axis perpendicularly intersects the X axis on the horizontal plane, and the vertical axis is the Z axis.

Additionally, the type of ER fluid to be used with this apparatus is not especially limited, and those which are already known are used, but the fluids for which the present inventor has applied for patents (Japanese Patent Application No. Hei 4-65021, Japanese Patent Application No. Hei 4-214394) are preferable.

These ER fluids are made either by dispersing inorganic/organic composite particles, formed from a core comprising an organic polymeric compound and a shell comprising inorganic ion exchangers, in an electrically insulating medium, or by dispersing inorganic/organic composite particles, formed from a core comprising an organic polymeric compound and a shell comprising an inorganic substance exhibiting ER effects, in an electrically insulating medium, wherein the surfaces of the inorganic/organic composite particles have been polished.

As the above-mentioned inorganic ion exchangers, at least one of the following, including hydroxides of polyvalent metals, hydrotalcites, acid salts of polyvalent metals, hydroxyapatite, Nasicon-type compounds, clay minerals, potassium titanates, heteropoly acid salts, and insoluble ferrocyanides or the like, are used, and as the above-mentioned inorganic substances exhibiting ER effects, at least one of the following, including inorganic ion exchangers such as hydroxides of polyvalent metals, hydrotalcites, acid salts of polyvalent metals, hydroxyapatite, Nasicon-type compounds, clay minerals, potassium titanates, heteropoly acid salts, and insoluble ferrocyanides, and silica gel or the like, are used.

Additionally, as examples of organic polymeric compounds used as the cores of the inorganic/organic composite particles, it is possible to give one of or a mixture or copolymer of two or more of the following, including poly(meth)acrylic ester, (meth)acrylic ester-styrene copolymers, polystyrene, polyethylene, polypropylene, nitrile rubber, butyl rubber, ABS resin, nylon, polyvinyl butylate, ionomers, ethylene-vinyl acetate copolymers, vinyl acetate resin, and polycarbonate resin or the like.

Additionally, any of the electrically insulating media used in conventional ER fluids may be used as the above-mentioned electrically insulating medium. For example, any fluid may be used which has high electric insulation and electric insulation breakdown strength, is chemically stable, and in which the inorganic/organic composite particles may be stably dispersed. Examples thereof include diphenyl chloride, butyl sebacate, aromatic polycarbonate higher alcohol ester, halophenyl alkyl ether, transformer oil, paraffin chloride, fluorinecontaining oil, silicone-contained oil, or the like. Furthermore, mixtures thereof may be used as well.

Furthermore, in order to produce this type of inorganic/organic composite particle, for example, a method is known wherein core particles composed of organic polymeric compounds and microparticles composed of inorganic materials exhibiting ER effects (hereinafter referred to as ER inorganic materials) are blown in a jet stream and caused to collide. In this case, the ER inorganic material microparticles collide with the surface of the core particles at high speed, adhere thereto, and form shells.

Furthermore, a different method is known in which core particles are suspended in a gas, and an ER inorganic material solution in spray form is sprayed onto the surfaces thereof. In this case, the solution is deposited on the surfaces of the core particles and dried, and thereby shells are formed.

However, the most preferable method for the manufacture of these inorganic/organic composite particles is one in which the core and the shell are simultaneously formed.

In this method, for example, when the organic polymeric compound monomer forming the core is subjected to emulsion polymerization, suspension polymerization, or dispersion polymerization in a polymerization medium, the ER inorganic material microparticles are dispersed in the above-described monomer or in the polymerization medium.

Water is preferable as the polymerization medium; however, it is also possible to use a mixture of water and a water soluble organic solvent, or to use an organic poor solvent.

In accordance with such a method, the monomer in the polymerization medium is polymerized and forms core particles, and simultaneously therewith, the ER inorganic material microparticles cover the surfaces of the core particles in a layered manner, thus forming the shells.

By means of this method in which the core and shell are simultaneously formed, the ER inorganic material particles are strongly attached and closely packed onto the surface of the core particles composed of organic polymeric compounds, and thus durable inorganic/organic composite particles are formed.

The shape of the inorganic/organic composite particles is not necessarily limited to a spherical shape; however, in the case in which the core particles are manufactured by means of a regulated emulsion or suspension polymerization method, the form of the inorganic/organic composite particles which are obtained is almost completely spherical.

The particle diameter of the inorganic/organic composite particles is not particularly restricted; however, a range of 0.1-500 µm, and in particular, a range of 5-200 µm is preferable.

The particle diameter of the ER inorganic microparticles is not particularly restricted; however, a range of 0.005-100 µm is preferable, and a range of 0.01-10 µm is still more preferable.

In this type of inorganic/organic composite particle, the weight ratio of the ER inorganic material forming the shells and the organic polymeric compound forming the cores is not particularly restricted; however, it is preferable that the ratio (ER inorganic material organic polymeric-compound) be within a range of 1 : 99-60 : 40, and still more preferably, that it be in a range of 4 : 96-30 : 70. If the weight ratio of the ER inorganic material is less than 1%, the ER effects of the ER fluid which is obtained will be insufficient, while when this weight ratio exceeds 60%, a current which is too large will flow in the fluid which is obtained.

Generally, inorganic/organic composite particles produced by one of the various methods described above, especially by a method in which the cores and the shells are simultaneously formed, are covered by a thin layer of organic polymeric material or an additive used in the process of manufacturing, such as dispersants, emulsifiers, or the like, and the ER effects of the ER inorganic microparticles cannot be sufficiently exhibited. Therefore, it is preferable that inorganic/organic composite particles having polished surfaces are used.

In the case in which the inorganic/organic composite particles are manufactured by a method in which the shells are formed after the formation of the cores, no inactive material will be present on the surfaces of the shells, and the ER effects of the inorganic ion exchanger will be sufficient, so polishing will not necessarily be required.

The polishing of the particle surfaces can be accomplished by a variety of methods. For example, it is possible to conduct this polishing by means of dispersing the inorganic/organic composite particles in a dispersion medium such as water or the like, and by agitating them. At this time, it is possible to conduct this polishing by means of a method in which a polishing material such as grains of sand or balls is mixed into the dispersion medium and is agitated along with the inorganic/organic composite particles, or by means of a method in which agitation is conducted using a grinding stone.

Furthermore, it is possible to conduct agitation without the use of a dispersion medium by employing a dry process using the inorganic/organic composite particles and a polishing material or grinding stone such as those described above.

A more preferable polishing method is a method wherein the inorganic/organic composite particles are subjected to jetstream-blown agitation in a jet air stream or the like. In this method, the particles themselves collide violently with each other in the gas and are thus polished, so that other polishing materials are unnecessary, and the inactive materials which are separated from the particle surfaces can be easily separated by means of classification, making this a preferable method.

In the above jetstream-blown agitation, it is difficult to specify the type of apparatus employed, the agitation speed, and polishing conditions, as a result of the qualities of the inorganic/organic composite particles; however, in general, an agitation speed of 6,000 rpm and a jetstream-blown agitation time of 0.5-15 minutes are preferable.

It is possible to produce this ER fluid by agitating and mixing the above-described inorganic/organic composite particles uniformly in an electrically insulating medium, and if necessary, together with other components such as dispersants or the like. Any agitator which is normally used for dispersing solid particles in a liquid dispersion medium may be used as an agitator for this purpose.

The percentage of inorganic/organic composite particles in the ER fluid of the present invention is not particularly restricted; however, a range of 1-75 wt% is preferable, and in particular, a range of 10-60 wt% is more preferable. When the percentage contained thereof is less than 1%, a sufficient ER effect cannot be obtained, while when the percentage contained is more than 75%, the initial viscosity of the components when a voltage is not applied is too great, so that use thereof is difficult.

The ER fluid for which the present inventor has already applied for a patent exhibits extremely strong ER effects, is exceptionally stable, does not wear down the electrode surfaces or the machinery walls due to its low abrasiveness, eliminates the danger of heat generation due to the low current which flows when voltage is applied, expends little energy, abounds in possible applications, and therefore is especially suitable for use with the damping apparatus of the present invention.

Regarding damping apparatus of this type of construction, by applying a direct current electric field between the first electrode 15 and the second electrode 17, the apparent viscosity of the ER fluid between the electrodes increases. As a result, vibrations such as chatter generated by processing on the table 14, of which the first electrode 15 is an extension, are absorbed. Thus, the vibration damping ability of the table 14 greatly increases.

Below, experimental results concerning the vibration damping ability of the damping apparatus of the above-described embodiment will be explained in detail.

In the following explanation, the ER fluid which is used is one in which inorganic/organic composite particles of an average diameter of 15-20 µm, made by coating the surface of the above-described polymer particle with particles of special titanium oxide, are dispersed in silicone oil. Additionally, the effective area of the two electrode surfaces 15a and 15b of the first electrode 15 is 6400 mm².

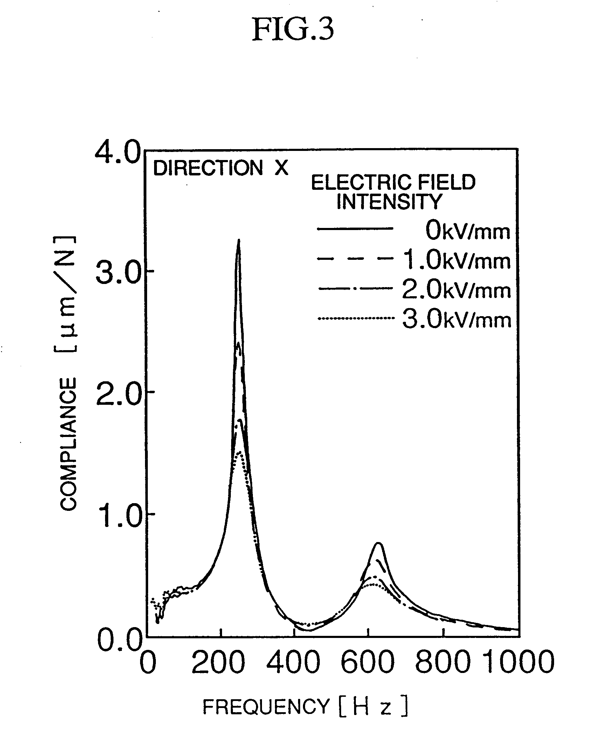

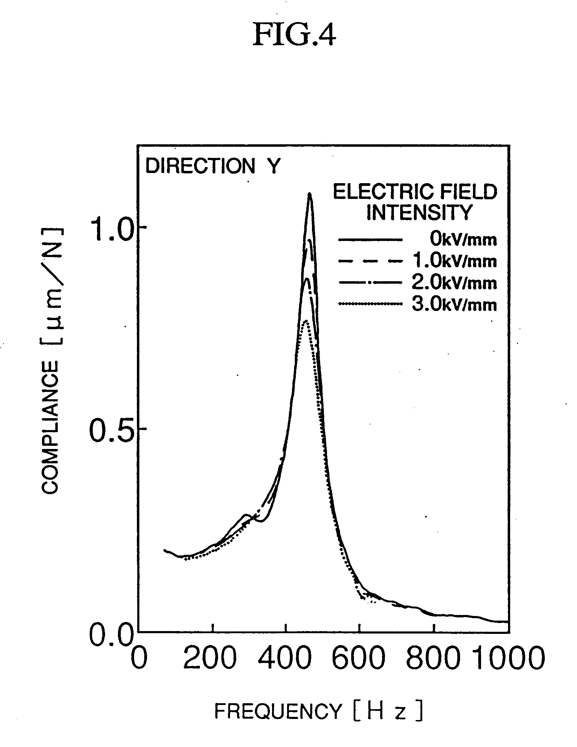

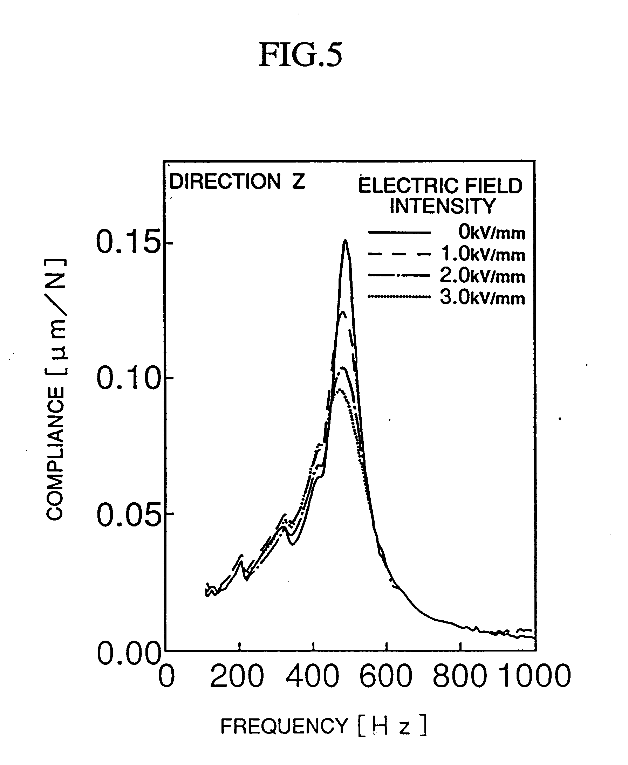

Figures 3 through 5 show graphs demonstrating the results of the determination of the relationship between the frequency and the dynamic compliance in the X, Y, and Z directions of the table 14, with the intensity of the applied electric field as a parameter. In this case, the electrode gap is 0.5 mm, the ER fluid has a particle content of 20 wt%, and the viscosity of the silicone oil itself is 10 centiStokes. The applied field intensities are 0, 1.0, 2.0, and 3.0 kV/mm.

From Figures 3 through 5, it is possible to deduce that as the applied field intensity is increased, the dynamic compliance of the resonance frequency of the table in each direction decreases. Meaning that the table's dynamic characteristics improve as well.

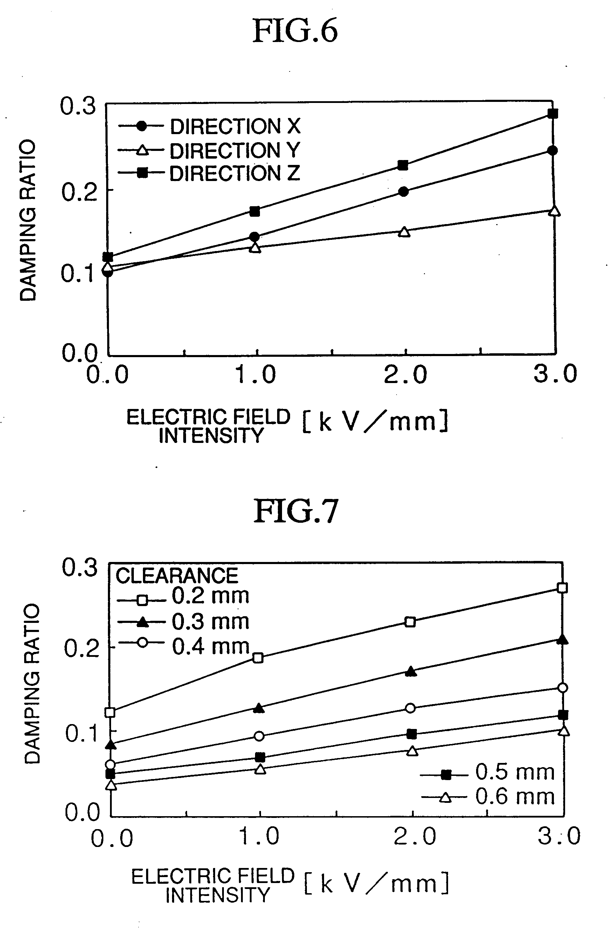

The graph shown in Figure 6 shows the relationship between the damping ratios in the X, Y, and Z directions and the applied field intensity of the table 14, confirming the effects gained from the ER fluid and the increase in the table's resistance to movement.

As is clear from the graph of Figure 6, with the damping apparatus of this embodiment, it is possible to obtain exceptional damping ability in the X and Z directions, but the performance in the Y direction is not quite sufficient. This stems from the geometries of the electrode surfaces of the first electrode 15 and the second electrode 17, and the fact that the electrode surfaces are composed along the X-Z plane.

The graph of Figure 7 shows the influence of the gap between the first electrode 15 and the second electrode 17, confirming that in the range of between 0.2-0.6 mm, there is a tendency for the damping ability to increase as the gap shortens. For this reason, it is preferable that the gap be as short as possible. However, due to limitations such as movement of the electrodes and production precision, the gap should be larger than 0.05 mm. Furthermore, in order to achieve sufficient ER effects a gap spacing of 1 mm or less is desirable.

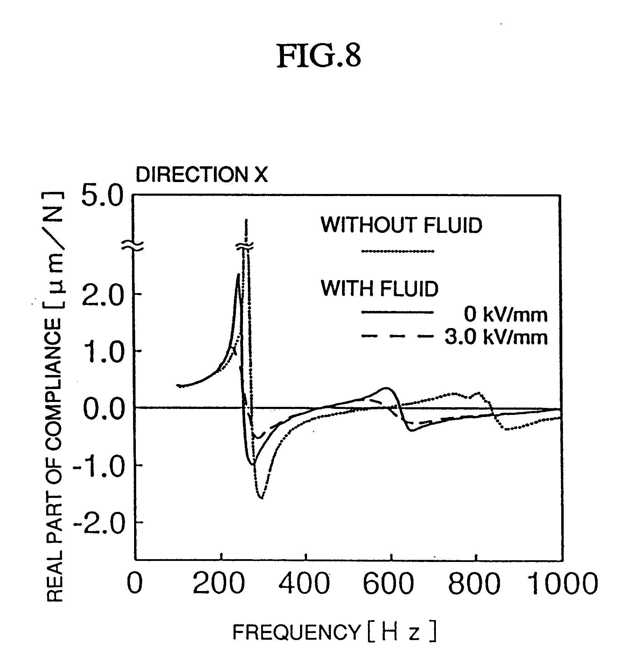

The graph of Figure 8 shows the damping ability with respect to chatter. The vertical axis represents the real part of the dynamic compliance in the table's X direction and the horizontal axis represents the frequency. Results are shown for the cases in which there is no ER fluid, ER fluid is used without an electric field, and ER fluid is used with an applied field of 3.0 kV/mm.

From this graph, it is possible to confirm that when an electric field of 3.0 kV/mm is applied, the maximum in the real part of the dynamic compliance becomes one third of the corresponding value for the case in which there is no ER fluid. Consequently, vibrations are able to be better suppressed.

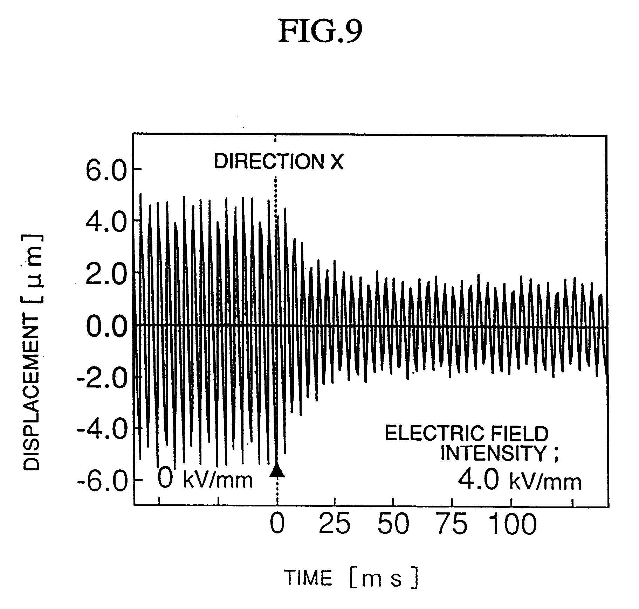

Figure 9 is a graph showing the damping response of the table according to this embodiment. It shows the time variation in the displacement after the electricity has been turned on at the time "0" on the horizontal axis. From this, it may be confirmed that the response characteristics are such that the time constant is 13 ms, and the rise time is 30 ms or less.

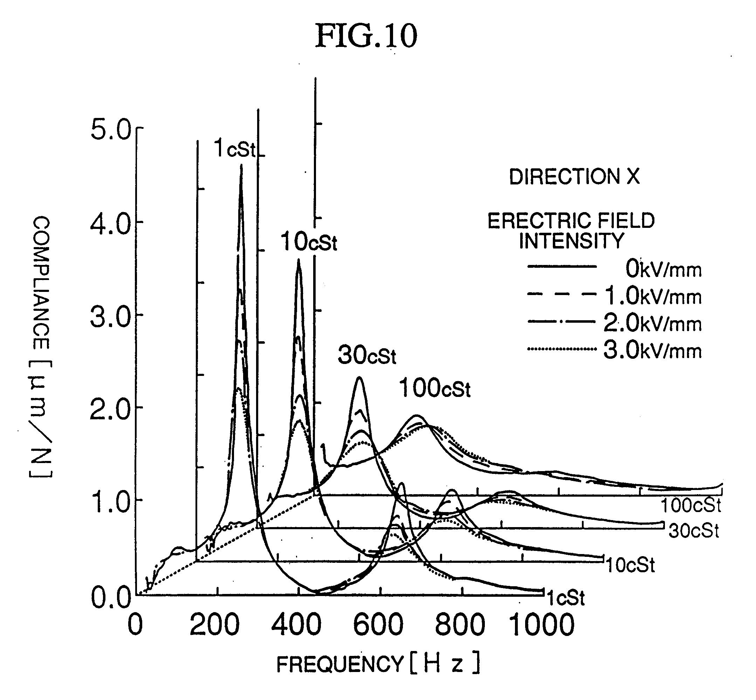

Figure 10 is a graph showing how the vibration damping ability is influenced by the viscosity of the silicone oil, which is the dispersion medium of the ER fluid used in the damping apparatus of this embodiment.

From these results, it is possible to deduce that if highly viscous silicone oil is used, then a high level of frictional damping is obtainable even without an electric field. However, in that case the drop in compliance at the resonance point decreases, and the range of control of the dynamic characteristics due to the ER effect becomes smaller. Furthermore, if the viscosity of the dispersion medium goes up, then a problem may arise in that the drive load during high speed feeding (during times of non-processing) of the table 14 could increase.

Therefore, the viscosity of the dispersion medium comprising the ER fluid should be in the range of 10-50 centiStokes for the damping apparatus.

As explained above, with the construction of the damping apparatus shown in Figures I and 2, exceptional vibration damping performance is obtainable, and it is possible to effectively suppress vibrations such as chatter which may be detrimental to processing. Furthermore, because it is possible to arbitrarily generate the control characteristics according to the application or non-application of an electric field and by the intensity thereof, it is easy to control.

Next, other embodiments of the damping apparatus of the present invention will be explained. These embodiments mainly show various modifications in the shapes of the electrodes.

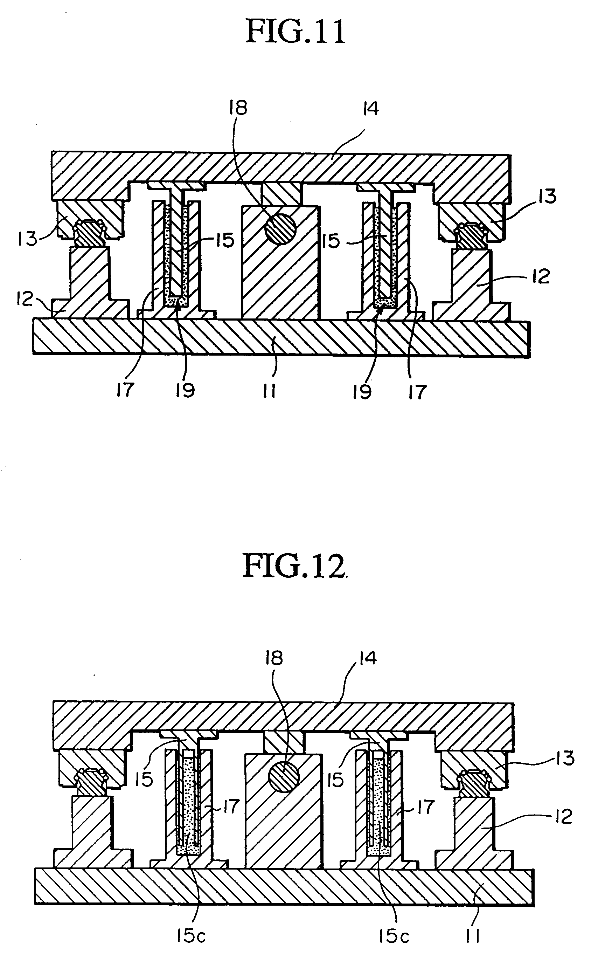

Figure 11 shows Embodiment 2, and the portions of the composition which are identical to Embodiment 1 will be given identical reference numbers and their explanation will be omitted. With this embodiment, as a drive means for moving the table 14 in either direction, a ball thread 18 is provided on top of the base plate 11, and at the center of the bottom surface of the table 14. With this ball thread 18 centered between them, the two opposing electrodes 19 and 19 made up of the first electrode 15 and the second electrode 17 respectively, are provided parallel to the direction of movement. Additionally, the first electrode 15 has a T-shaped cross section, and is attached to the bottom surface of the table 14. Furthermore, rolling guides are provided on either side of the table 14 which are parallel and symmetric.

With this embodiment, it is of course possible to have a large effective area for the electrode surfaces, the obtainable ER effect becomes greater, and thereby the damping effect becomes greater.

Figure 12 shows Embodiment 3, in which, taking Embodiment 2 explained above, grooves 15c and 15c stretching in the lengthwise direction are formed by boring into the electrode panels of the first electrodes 15 and 15. With this embodiment, the effective area of the electrode surfaces is equal to that of Embodiment 2, but the resistance when moving the table 14 without the application of electricity is decreased. Therefore, the drive load on the ball thread 18 can be reduced.

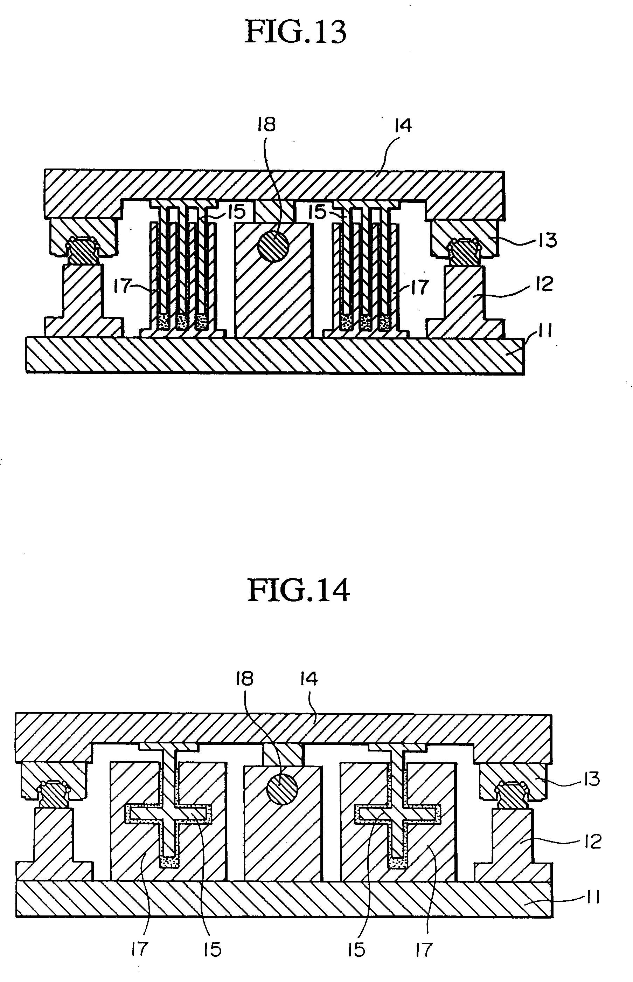

Figure 13 shows Embodiment 4. Taking Embodiment 2, the number of electrode panels of the first electrode 15 has been increased to three, and these are inserted into three cavities 17a ... which have been formed in the second electrode 17. With this embodiment the effective area of the electrode surfaces increases further, and exceptional vibration damping performance may be achieved due to the increased ER effect. Alternatively, the number of electrodes may of course be two, or four or more.

Figure 14 shows Embodiment 5. With this embodiment, the form of the first electrode 15 is cross-shaped, and correspondingly the concavity 17a of the second electrode 17 is also cross-shaped. With this embodiment, ER effects arise in both the perpendicular and horizontal directions of the table 14. Of the electrode surfaces of the first electrode 15, the coordinate system of the perpendicular surface lies on the X-Z plane, and that of the horizontal surface lies on the X-Y plane. For this reason, with the perpendicular surface, ample damping is obtained in the X and Z directions, while with the horizontal surface, ample damping is obtained in the X and Y directions. This results in excellent vibration damping performance in all three X, Y, and Z directions.

With this embodiment, the electrode surfaces of the first electrode 15 both intersect each other at a right angle, but the intersection angle need not be fixed at 90 degrees. A range of 10-170 degrees, preferably 45-135 degrees, and more preferably 60-120 degrees is possible. Of course, the most preferable angle for practical purposes is 90 degrees.

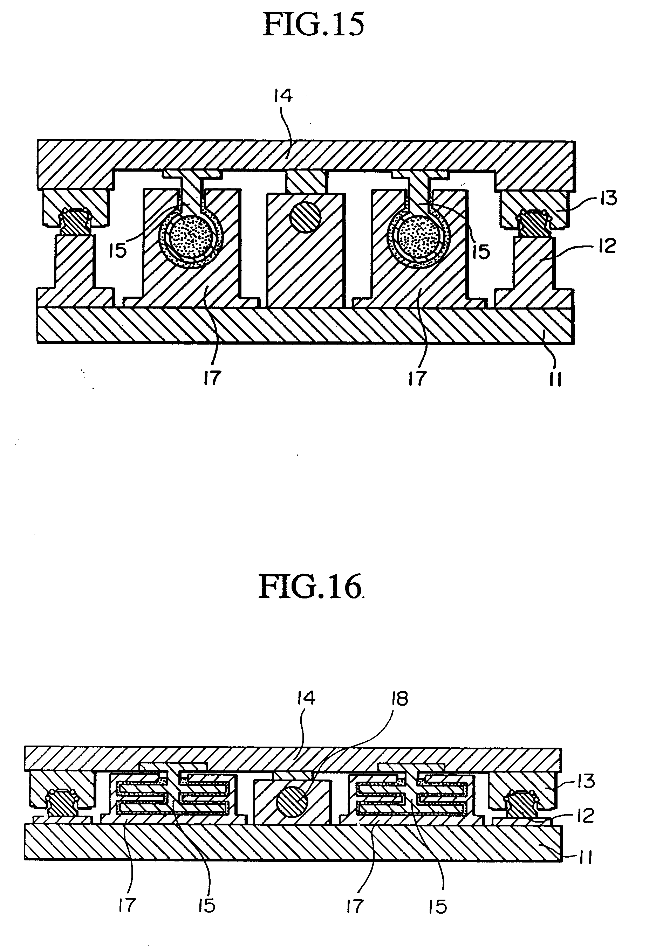

Figure 15 shows Embodiment 6, in which the first electrode 15 is pipe-shaped and the concavity 17a of the second electrode 17 is correspondingly circular. With this embodiment, since the circumferential surface forms the electrode surface, exceptional damping is obtainable in all three directions, as in the previous embodiment. Additionally, since it is hollow, the moving resistance of the table 14 is small when there is no electric field as in Embodiment 3.

Furthermore, pipes are generally quite easily processed, so the processing precision is high. This makes it possible for the gap between the electrodes to be small, and therefore a good ER effect is obtainable.

Additionally, within the hollow space, it is possible to provide mutually opposing board-shaped first auxiliary electrodes and second auxiliary electrodes respectively attached to the first electrode 15 and the second electrode 17.

Additionally, as a modification to this embodiment, it is possible to utilize a solid cylinder for the first electrode 15.

Figure 16 shows Embodiment 7. With this embodiment, the cross-sectional shape of the first electrode 15 is that of a sideways H (i.e., two horizontal bars connected at the center by a vertical bar). This ensures that sufficient damping effectiveness can be obtained in the horizontal direction by making the electrode area larger, shortening the perpendicular length of the electrode, and embedding the portion of the electrode 15 which attaches to the table 14 within the table 14.

With this type of composition, it is possible to lower the overall height of the table. Therefore, if this table system is used such that two layers intersecting in the X and Y directions are lain one on top of the other, allowing the direction of movement of the table to be in both the X and Y directions, their overall thickness is decreased, and allowed to be compact.

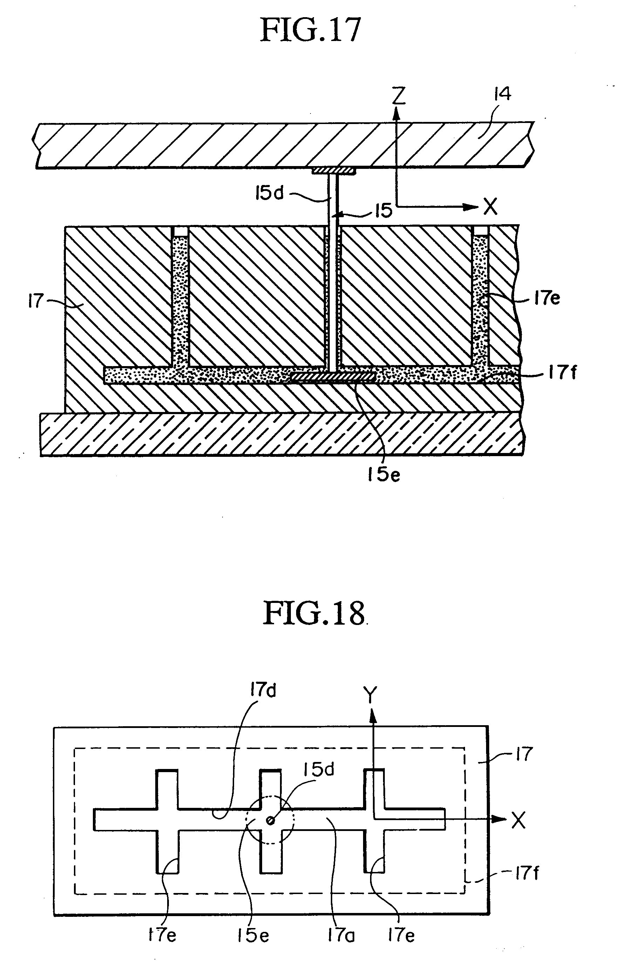

Figures 17 and 18 show Embodiment 8. In this embodiment, the first electrode 15 is composed of a leg portion 15d stretching vertically down from the bottom surface of the table 14 and a disc-shaped electrode portion 15e attached to the end of this leg portion 15d.

On the other hand, the concavity 17a of the second electrode 17 is formed from a long, thin main channel 17d along the X direction of the table 14 and a plurality of auxiliary channels 17e ... which intersect this main channel 17d at right angles. At their bottom portions, a space 17f is formed. This space 17f stretches throughout the body of the electrode as shown by the dotted line.

With this type of construction, the first electrode 15 is able to move in both the X and Y directions, although with some limitations. By supporting and guiding the table 14 itself with an appropriate guiding means, it is possible to move the table 14 in both the X and Y directions and also obtain an exceptional damping effect due to the ER effect.

Furthermore, the damping apparatus of the present invention is not limited to application with tables. Applications are possible with, for example, movable spindle heads for radial drilling machines and the like.

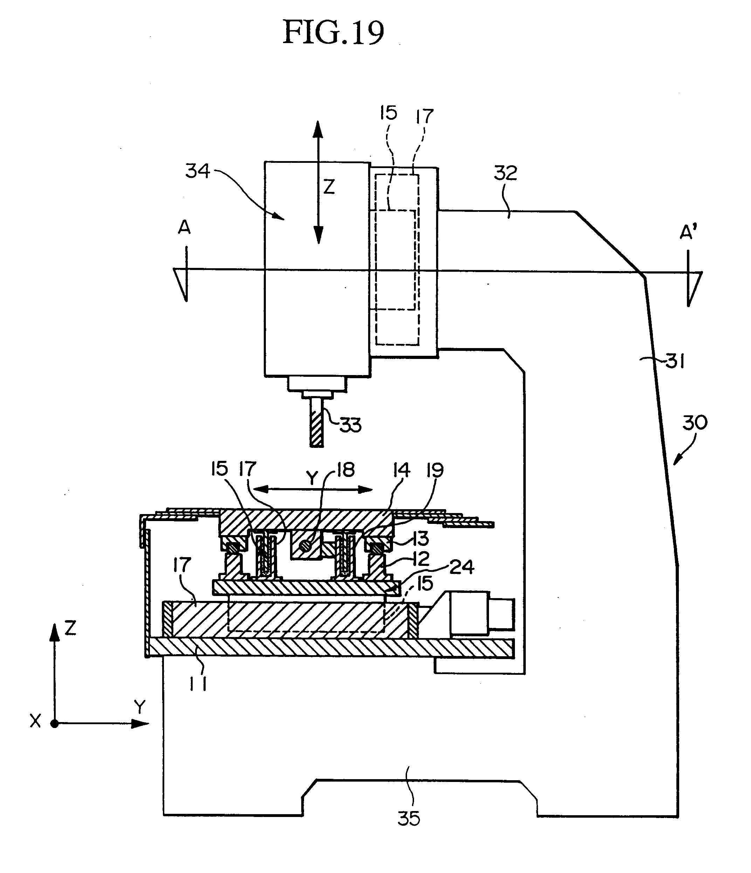

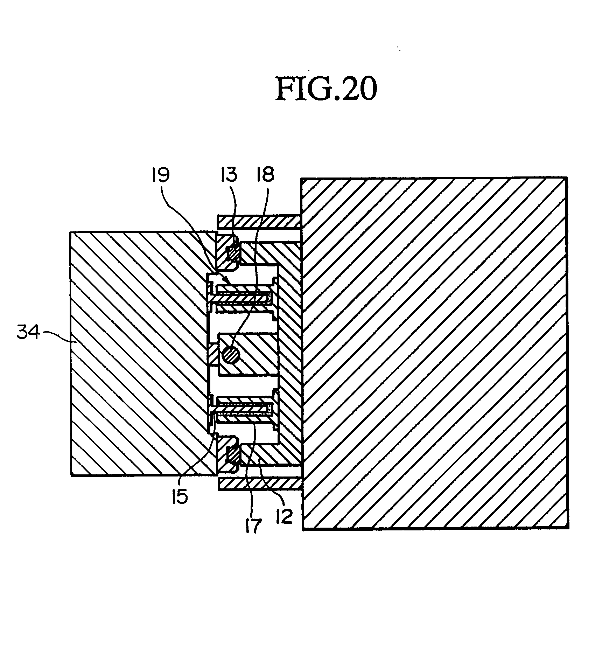

Figures 19 and 20 show Embodiment 9, which is an example wherein the machine tool damping apparatus of the present invention is applied to a movable spindle head and bi-directional movable table for a radial drilling machine. Figure 20 shows a cross-sectional view of Figure 19 cut along the line A-A'. As for the shape of the electrodes of the damping apparatus, that shown in Figure 11 for Embodiment 2 is used. In Figures 19 and 20, the elements which are identical to those in Embodiment 2 have the same reference numerals, and their explanation will be omitted.

With the radial drilling machine 30, a horizontal arm 32 extends from the upper portion of an upright column 31. To this horizontal arm 32, a spindle head 34 is attached so as to be able to move vertically (in the Z direction). A tool (spindle) is then attached to this spindle head 34. First electrodes 15 are attached to the spindle head 34 along the Z direction, and second electrodes 17 are attached to the horizontal arm 32 along the Z direction. Additionally, the cavity portions 17a of the second electrodes 17 are filled with ER fluid, and are sealed so that the ER fluid is not able to flow outside of the cavity portions 17a.

On the bottom portion of the column 31 is provided a table base 35 which extends in the horizontal direction. To this table base 35, a baseplate 11 is attached, and a Y table 24 which is able to move in the Y direction is provided thereon. First electrodes 15 are attached to the bottom surface of the Y table 24 along the Y direction, and second electrodes 17 are attached to the top surface of the base plate 11 along the Y direction.

Furthermore, on top of the Y table 24, a X table 14 which is able to move in the X direction is provided. With the use of such a two-tiered table system, the X table 14 is able to move in both the X and Y directions. First electrodes 15 are attached to the bottom surface of the X table 14 along the X direction, and second electrodes 17 are attached to the top surface of the Y table 24 along the Y direction.

With a radial drilling machine of this type of construction, excellent damping ability for the spindle head 34 is obtainable in both the Y and Z directions. Additionally, the same concept can also be applied to vertical milling machines, horizontal milling machines, and vertical and horizontal type machining centers. Consequently, excellent damping ability is obtainable in all three X, Y and Z directions on the table portion constructed by stacking the X table 14 on top of the Y table 24. Consequently, it is possible to effectively suppress vibrations of the spindle head and the table portion arising during processing.

## Claims

1. A machine tool damping apparatus characterized in
having a first electrode attached to a movable table and a second electrode attached to a table base,
the first electrode having at least one electrode surface,
the second electrode having at least one electrode surface opposing the electrode surfaces of the first electrode so as to form a small gap therebetween, and
the gap between the electrode surfaces of the first electrode and the electrode surfaces of the second electrode being filled with an electrorheological fluid.

2. A machine tool damping apparatus characterized in
having a first electrode attached to a movable spindle head and a second electrode attached to a support body supporting said movable spindle head,
the first electrode having at least one electrode surface,
the second electrode having at least one electrode surface opposing the electrode surfaces of the first electrode so as to form a small gap therebetween, and
the gap between the electrode surfaces of the first electrode and the electrode surfaces of the second electrode being filled with an electrorheological fluid.

3. A machine tool damping apparatus according to either of claims 1 or 2, wherein either the first electrode or the second electrode is board-shaped, and the front surface and the back surface of this board-shaped electrode are electrode surfaces.

4. A machine tool damping apparatus according to claim 3, wherein said board-shaped electrode has a groove bored therein.

5. A machine tool damping apparatus according to either of claims 1 or 2, wherein the electrode surfaces of said first electrode and the electrode surfaces of said second electrode are flat, there are two or more such flat electrode surfaces, and these electrode surfaces mutually intersect at an angle of 10-170 degrees.

6. A machine tool damping apparatus according to either of claims 1 or 2, wherein either the first electrode or the second electrode is pipe-shaped, and its circumference is an electrode surface.

7. A machine tool damping apparatus according to either of claims 1 or 2, wherein either the first electrode or the second electrode is cylindrical, and its circumference is an electrode surface.

8. A machine tool damping apparatus according to either of claims 1 or 2, wherein said electrorheological fluid is made by dispersing inorganic/organic composite particles, formed from a core comprising organic polymeric compounds and a shell comprising inorganic ion exchangers, in an electrically insulating medium.

9. A machine tool damping apparatus according to claim 8, wherein said inorganic ion exchangers are selected from the group consisting of hydroxides of polyvalent metals, hydrotalcites, acid salts of polyvalent metals, hydroxyapatite, Nasicon-type compounds, clay minerals, potassium titanates, heteropoly acid salts, and insoluble ferrocyanides, and any combination thereof.

10. A machine tool damping apparatus according to either of claims 1 or 2, wherein said electrorheological fluid is made by dispersing inorganic/organic composite particles, formed from a core comprising organic polymeric compounds and a shell comprising inorganic substances exhibiting electrorheological effects, in an electrically insulating medium, and the surfaces of said inorganic/organic composite particles are polished.

11. A machine tool damping apparatus according to claim 10, wherein said inorganic substances exhibiting electrorheological effects are selected from the group consisting of hydroxides of polyvalent metals, hydrotalcites, acid salts of polyvalent metals, hydroxyapatite, Nasicon-type compounds, clay minerals, potassium titanates, heteropoly acid salts, insoluble ferrocyanides, and silica gel, and any combination thereof.
